# EUROPÄISCHE PATENTSCHRIFT

(11) **EP 3 822 054 B1**
(45) Veröffentlichungstag und Bekanntmachung des Hinweises auf die Patenterteilung: **20.03.2024**
(21) Anmeldenummer: 19208677.5
(22) Anmeldetag: 12.11.2019
(51) Int. Cl.: B27N 1/00, B27D 1/00, B27N 3/18, B27N 7/00, B32B 21/02, B32B 21/04, B32B 21/08, B32B 21/14, B27N 9/00

(54) **VERFAHREN ZUM HERSTELLEN EINER FURNIERTEN PLATTE**
METHOD FOR PRODUCING A VENEERED PLATE
PROCÉDÉ DE FABRICATION D'UNE PLAQUE CONTREPLAQUÉE

(43) Veröffentlichungstag der Anmeldung: 19.05.2021
(73) Patentinhaber: Flooring Technologies Ltd., Kalkara SCM1001 (MT)
(72) Erfinder: Kalwa, Dr. Norbert, 32805 Horn-Bad Meinberg (DE); HASCH, Prof. Dr. Joachim, 10317 Berlin (DE)
(74) Vertreter: Kalkoff & Partner Patentanwälte mbB

(56) Entgegenhaltungen:
- EP-A1- 2 927 018
- US-A- 3 817 822
- US-A1- 2017 190 156

## Beschreibung

Die Erfindung betrifft ein Verfahren zum Herstellen einer furnierten Platte und ein Furnier.

Furnierte Platten vermitteln den Eindruck einer Echtholz-Oberfläche, sind aber durch den sparsamen Einsatz der dünnen Furnierlagen in Verbindung mit einer Trägerplatte sehr wirtschaftlich. Eine typische furnierte Platte, bei der das Furnier mittels eines kunstharzgetränkten Papiers auf der Trägerplatte fixiert wird, wird in der EP 2 902 196 A1 aber auch der DE 103 00 247 B4 vorgestellt. US2017/190156 offenbart ein Verfahren zum Herstellen einer Holzwerkstoffplatte, wobei zwischen einem Furnier und einer Trägerplatte ein Additiv aufgebracht wird.

Aus der US 3 817 822 A ist ein Verfahren zur Herstellung von feuerresistentem Sperrholz bekannt.

Nachteilig an den bekannten furnierten Platten ist, dass der Aufbau der furnierten Platte komplex ist und dass die Eigenschaften des Furniers nur sehr eingeschränkt verbessert werden können.

Es ist daher Aufgabe der Erfindung, ein Verfahren zum Herstellen einer einfach aufgebauten, furnierten Platte bereitzustellen, dass es zudem ermöglicht, die Eigenschaften des Furniers einfacher zu verbessern.

Diese Aufgabe wird gelöst mit einem Verfahren nach Anspruch 1.

Das erfindungsgemäße Verfahren zum Herstellen einer furnierten Platte ist in Anspruch 1 definiert.

Als Trägerplatte kann jede auf mindestens einer Seite ebene Platte eingesetzt werden, die mit Bindemittel eine feste Verbindung eingeht. Vorzugsweise werden Holzwerkstoffplatten eingesetzt, z. B. mitteldichte oder hochdichte Faserplatten (MDF, HDF), Spanplatten, OSB-Platten, Massivholzplatten, Sperrholz sowie Stab- oder Stäbchenplatten, aber auch zementgebundene Spanplatten oder Faserplatten, einschließlich Faserplatten mit hohem Bindemittelanteil, sowie BioCompositplatten und wasserfeste Platten sind geeignet. Wasserfeste Platten sind Platten, auch Holzwerkstoffplatten, die sich unter Einwirkung von Wasser kaum oder gar nicht verformen, die insbesondere nicht oder kaum quellen. Die Trägerplatte weist eine Oberseite auf, auf der das Furnier aufgebracht wird und eine Unterseite, auf der optional ein Gegenzug aufgebracht wird.

Als Furnier werden Lagen aus Echtholz eingesetzt, die eine Dicke von bis zu 10 mm, vorzugsweise jedoch von 0,2 mm bis 5 mm, insbesondere von 0,5 mm bis 2 mm aufweisen. Das Furnier kann einstückig von einem Stamm durch Messern oder Schälen hergestellt sein. Es kann aber auch aus einzelnen Stücken zusammengesetzt sein, die z. B. durch Bindemittel oder durch einen Leimfaden miteinander verbunden sind. Es weist in der Regel einen Feuchtegehalt von maximal 20 Gew.-%, bevorzugt von maximal 12 Gew.-%, insbesondere von maximal 8 Gew.-% auf. Das Furnier weist bevorzugt die Abmessungen der Trägerplatte auf. Das Furnier weist eine der Trägerplatte zugewandte Unterseite und eine der Trägerplatte abgewandte Oberseite auf.

Als Additiv können, jeweils einzeln oder in Mischung oder nacheinander, verschiedene Substanzen oder Verbindungen auf das Bindemittel aufgetragen werden. Als Additiv sind beispielsweise geeignet: Flammschutzmittel wie z. B. Ammoniumphosphate oder Wasserglas, ein UV-Stabilisator, ein Infrarotabsorber, antibakterielle Mittel, Hydrophobierungsmittel, Bleichmittel oder Beize. Je nach benötigter oder gewünschter Eigenschaft kommen natürlich auch beliebige andere Additive in Frage Das Additiv kann als Feststoff, vorzugsweise als partikelförmiger Feststoff, z. B. als Staub oder Pulver, aber auch als Granulat vorliegen. Alternativ kann ein flüssiges oder pastöses Additiv eingesetzt werden. Allerdings kann das Additiv auch im Bindemittel löslich sein; dann wird das Additiv ggf. nicht vollständig mit an die Oberfläche transportiert. Dies ist eine Frage der Dosierung des Additivs.

Nach einer Weiterbildung der Erfindung ist das Additiv nicht in dem Bindemittel lösbar bzw. nicht homogen im Bindemittel lösbar. Auf diese Weise ist gewährleistet, dass das Additiv sich nicht mit dem Bindemittel vermischt und dadurch an Wirksamkeit verliert, sondern vielmehr auf der Oberfläche des Bindemittels verbleibt und dadurch möglichst vollständig in Kontakt mit dem Furnier kommt.

Das Bindemittel ist vorzugsweise ein duroplastisches Harz, insbesondere ein aminoplastisches oder phenolbasiertes Harz. Nachfolgend wird das Bindemittel auch als Kunstharz bezeichnet. Typisch werden Melaminharz, Phenolharz, Harnstoffharz oder Mischungen dieser Harze eingesetzt. Das Kunstharz wird in einer Menge von 100 bis 200 g/m² auf das Furnier aufgebracht. Die Auftragsmenge des Kunstharzes ist u. a. von der Dicke des Furniers abhängig. Das Kunstharz wird in einer Menge eingesetzt, die gewährleistet, dass das Kunstharz das Furnier mindestens abschnittsweise durchdringt und dadurch das Additiv in das Furnier, ggf. bis an die Oberseite des Furniers transportiert. Das Kunstharz wird bevorzugt als Feststoff, insbesondere staub- oder pulverförmig oder als Granulat eingesetzt, wobei das Kunstharz auf die mit einem Additiv versehene Unterseite des Furniers aufgetragen, insbesondere aufgestreut oder aufgesprüht wird. Bevorzugt werden Tribopistolen zum Aufbringen des Kunstharzes eingesetzt. Es ist aber auch möglich, dass ein erster Teil des Kunstharzes in Pulverform aufgetragen wird und ein zweiter Teil des Kunstharzes in flüssiger Form aufgebracht wird.

Erfindungsgemäß wird zunächst das Additiv auf die Unterseite des Furniers aufgetragen. Vorteilhaft weist die Unterseite des Furniers beim Auftragen des Additivs nach oben, so dass das Additiv auf der Unterseite des Furniers liegt. Nach dem Auftragen des Additivs oder dem Auftragen einer Mischung von Additiven oder dem aufeinander folgenden Auftragen von mehreren Additiven kann optional das Additiv fixiert werden, z. B. durch Trocknen oder Erwärmen. Beispielsweise kann flüssiges Additiv, z. B. Tinte, getrocknet werden. Es hat sich gezeigt, dass trotz des Fixierens des Additivs das Additiv während des Pressvorgangs, wenn das Kunstharz vor dem Aushärten verflüssigt wird und das Furnier mindestens abschnittsweise durchdringt, von dem Kunstharz durch das Furnier transportiert wird, so dass z. B. ein ästhetischer Effekt zuverlässig mit geringem Einsatz an Additiv erzielt wird.

Anschließend wird erfindungsgemäß Kunstharz auf das Furnier aufgetragen. Das Kunstharz kann in flüssiger Form aufgetragen werden, z. B. aufgesprüht oder aufgegossen werden. Bevorzugt wird das Kunstharz jedoch als Feststoff aufgetragen, erfindungsgemäß in Form von Partikeln, z. B. als Staub, Pulver oder Granulat. Der Einsatz von Kunstharz in Form von Partikeln ist aus der WO 2010/121971 A2 bekannt, wird dort allerdings auf Papier aufgetragen.

Um das Anhaften von Additiv und Kunstharz am Furnier zu verbessern, wird das Kunstharz nach dem Auftragen auf das Furnier erwärmt, so dass die Partikel des Kunstharzes erfindungsgemäß mindestens an der Oberfläche erweichen und aneinanderhaften. Das Erwärmen kann z. B. in einem bekannten Kanalofen erfolgen, bevorzugt mit Infrarotstrahlern, um zu verhindern, dass die Partikel des Kunstharzes durch Luftbewegung aufgewirbelt werden. Da die Additive in der Regel in geringer Menge aufgetragen werden, haften beim Erwärmen des Kunstharzes auch Partikel am Furnier, so dass Additive und Kunstharz sicher mit dem Furnier verbunden sind.

Wenn Additiv und Kunstharz so auf dem Furnier fixiert sind, kann das Furnier gelagert werden. Das Furnier kann aber auch weiterverarbeitet werden. Es wird zu diesem Zweck mit der Unterseite auf eine Trägerplatte gelegt. Auf einer Oberseite der Trägerplatte liegt das Kunstharz auf, auf dem Kunstharz liegt das Additiv auf, darauf als äußere Lage das Furnier. Trägerplatte und mit Additiv und Kunstharz versehenes Furnier werden also zu einem Pressgutstapel geschichtet, wobei eine Unterseite des mit Kunstharz und Additiv versehenen Furniers auf einer Oberseite der Trägerplatte aufliegt.

Optional kann ein Gegenzug auf der Unterseite der Trägerplatte angeordnet sein. Der Gegenzug soll die Zugkräfte kompensieren, die durch das Furnier auf der Oberseite der Trägerplatte ausgelöst werden. Der Gegenzug ist meist ein kunstharzgetränktes Papier oder eine kunstharzgetränkte Pappe, es könnte aber auch ein Furnier oder eine andere flächige Schicht sein, die flächig mit der Unterseite der Trägerplatte verbunden ist. Bevorzugt wird ein Gegenzug eingesetzt, der der Beschichtung auf der Oberseite der Trägerplatte vergleichbar oder ähnlich ist. Vorteilhaft wird im Zusammenhang mit der Erfindung also ein Furnier eingesetzt, dass mit Kunstharz und optional auch mit einem Additiv beschichtet ist.

Der Pressgutstapel wird zu einer furnierten Platte verpresst. In der Presse wird das Kunstharz unter Einwirkung von erhöhter Temperatur und erhöhtem Druck verflüssigt, es härtet chemisch aus und erstarrt beim Abkühlen. Die Presszeit beträgt typisch zwischen 20 Sekunden und 60 Sekunden. Die Presstemperatur liegt meist zwischen 100 °C und 240 °C, bevorzugt zwischen 160 °C und 200°C. Der Pressdruck beträgt zwischen 25 N/mm² und 50 N/mm². Während des Pressvorgangs dringt das verflüssigte Kunstharz in das Furnier. Das Furnier weist, anders als die dichte Oberfläche der Trägerplatte, Hohlräume auf, zum einen herstellungsbedingte Risse und Spalten, aber auch holztypische Hohlräume, z. B. durch angeschnittene Gefäße. Das in das Furnier eindringende Kunstharz bewirkt die feste Anbindung des Furniers an die Trägerplatte.

Diese Beschreibung zeigt deutlich, dass die Herstellung der furnierten Platte aus nur zwei Bestandteilen, dem mit Additiv und Kunstharz beschichteten Furnier und der Trägerplatte, erfolgt. Damit ist der Pressgutstapel besonders einfach herzustellen. Bei zwei Lagen besteht kein Risiko des Verrutschens oder Verschiebens der Lagen gegeneinander, die Produktion wird also weniger Ausschuss erzeugen. Trotzdem können sämtliche Gebrauchseigenschaften des Furniers wie gewünscht eingestellt werden, d. h., die furnierte Platte kann mit einer breiten Palette von Eigenschaften bereitgestellt werden. Das im Pressgutstapel auf dem Kunstharz aufliegende Additiv wird während des Pressvorgangs im Wesentlichen ohne Vermischung mit dem Kunstharz durch das Furnier gefördert und kann so ohne große Verluste direkt dort seine Wirkung entfalten, wo sie benötigt wird.

Die Erfindung betrifft nicht eine furnierte Platte, aufweisend eine Trägerplatte und ein oberhalb der Trägerplatte angeordnetes Furnier, wobei das Furnier kunstharzgetränkt ist, und dass sich auf der Oberseite des Kunstharzes im Furnier Additive befinden. Die Additive, die die Gebrauchseigenschaften des Furniers verbessern, befinden sich überwiegend im Furnier. Das Kunstharz ist im Wesentlichen frei von Additiv.

Die furnierte Platte weist nach einer weiteren Ausführungsform, die nicht Teil der beanspruchten Erfindung ist, einen Gegenzug auf der Unterseite der Trägerplatte auf. Der Gegenzug kann ein kunstharzgetränktes Papier oder ein kunstharzgetränkter Karton bzw. eine Pappe sein, ist aber bevorzugt auch als Furnier ausgeführt. Der Gegenzug wird als Bestandteil des Pressgutstapels mit der Trägerplatte verpresst und bewirkt, dass sich die furnierte Platte nicht verzieht, weil nun auf beiden Seiten der Trägerplatte annähernd gleiche Kräfte wirken. Wird ein Furnier als Gegenzug eingesetzt, so kann es in gleicher Weise wie vorstehend für das Furnier auf der Oberseite der Trägerplatte beschrieben mit einem Additiv und Kunstharz versehen sein.

Als Trägerplatte kann jede Platte eingesetzt werden, die eine ebene Oberfläche aufweist.

Bevorzugt ist die Trägerplatte eine Holzwerkstoffplatte oder eine BioCompositplatte, so wie vorstehend beschrieben.

Details der Erfindung werden an Hand von Ausführungsbeispielen nachfolgend näher erläutert. Es zeigt:

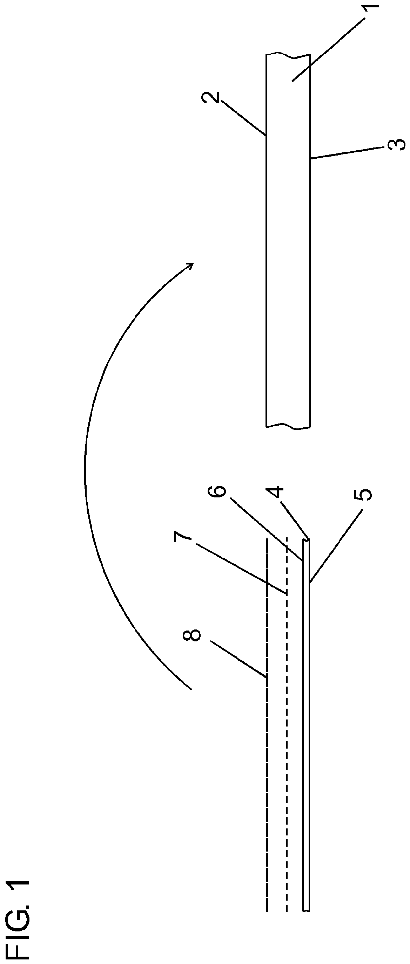

- Fig. 1: eine schematische Darstellung der Schichten einer erfindungsgemäßen Trägerplatte.

Die Bestandteile der furnierten Platte sind eine Trägerplatte 1 mit einer Oberseite 2 und einer Unterseite 3. Des Weiteren ist Bestandteil der furnierten Platte ein Furnier 4 mit einer Unterseite 5 und einer Oberseite 6. Vor dem Schichten eines Pressgutstapels wird das Furnier hergerichtet. Das erfolgt, indem das Furnier mit der Unterseite 5 nach oben angeordnet wird. Auf die Unterseite des Furniers 4 wird zunächst ein Additiv 7 aufgebracht. Alternativ kann eine Mischung von Additiven aufgebracht werden oder es werden mehrere Additive in Folge aufgetragen. Ist das Additiv 7 aufgebracht, wird eine Schicht Kunstharz 8 aufgebracht. Das Kunstharz 8 wird hier als Feststoff eingesetzt, und zwar als partikelförmiger Feststoff. Das Kunstharz 8 wird mittels Tribopistolen aufgesprüht.

Anschließend an das Aufbringen des Kunstharzes 8 wird das Furnier 4 mit dem auf die Unterseite 5 des Furniers 4 aufgebrachten Additiv 7 sowie dem auf dem Additiv 7 aufgetragenen Kunstharz 8 erwärmt. Dabei erweicht mindestens die Oberfläche des Kunstharzes 8, so dass die einzelnen Partikel aneinanderhaften. Je nach dem Ausmaß der Erwärmung kann das Kunstharz auch zu einer Schicht verfließen. Es härtet aber durch das Erwärmen nicht aus, sondern bleibt reaktiv. Da Kunstharzpartikel 8 auch mit dem Additiv 7 und der Unterseite 5 des Furniers in Kontakt stehen, wird auch das Additiv 7 mit an die Unterseite 5 des Furniers 4 gebunden. Nachdem Kunstharz 8 und Additiv 7 so am Furnier 4 gebunden sind, kann das Furnier 4 gelagert oder unmittelbar weiterverarbeitet werden.

Die weitere Herstellung einer furnierten Platte erfolgt dadurch, das das Furnier 4 mit seiner Unterseite 5 auf die Oberseite 2 einer Trägerplatte aufgelegt wird, wodurch ein Pressgutstapel geschichtet wird. Der Pressgutstapel wird in einer Presse zu einer furnierten Platte verpresst. Optional wird der Pressgutstapel um einen Gegenzug ergänzt, der auf der Unterseite 3 der Trägerplatte 1 angebracht wird und der dann die Unterseite der furnierten Platte 1 bildet. Der Gegenzug ist nach einer vorteilhaften Ausführung in gleicher Weise ausgebildet wie das mit Additiv beschichtete Furnier 4 auf der Oberseite der Trägerplatte. Grundsätzlich ist aber jede Beschichtung auf der Unterseite der Trägerplatte als Gegenzug geeignet, die mindestens teilweise die Kräfte auffängt, die durch das auf der Oberseite 2 der Trägerplatte 1 angeordnete Furnier 4 ausgeübt wird.

### Ausführungsbeispiel 1 - Aufbringen von Tinte

Furnierblätter aus Eiche (0,8 mm Stärke) werden mit der Unterseite nach oben weisend auf einem Transportband abgelegt. In einer ersten Behandlungsstation wird über eine Sprühleiste flüssige schwarze Digitaldrucktinte (Verdünnung 1:10) in einer Menge von 5 g/m² aufgesprüht und mit Hilfe eines IR-Strahlers getrocknet. Danach werden in einer zweiten Behandlungsstation mit Hilfe von Tribopistolen 120 g/m² Kunstharz, hier Melaminharz, als Feststoff auf die Digitaldrucktinte aufgetragen. Die Fixierung des Harzes erfolgt über die elektrostatische Aufladung. Das Kunstharz wird mit Hilfe eines IR-Strahlers angeschmolzen, sodass sich das Harz beim Manipulieren des Furnierblatts nicht ablöst bzw. herunterrieselt. Das Furnierblatt wird dann wieder gedreht, sodass das Additiv und das Kunstharz auf der Unterseite nach unten weisen.

Als Gegenzug wird ein zweites Furnierblatt (Birke, Stärke 0,8 mm) ebenfalls mit der gleichen Menge Melaminharz in der gleichen Menge beaufschlagt wie zuvor für das Furnier beschrieben, das auf die Oberseite der Trägerplatte aufgebracht wird, und das Harz wiederum erwärmt, so dass es verfließt und angeliert.

Als Trägerplatte wird eine hochdichte Faserplatte (HDF-Platte) eingesetzt, die eine Dicke von 12 mm aufweist.

Danach wird folgender Pressgutstapel geschichtet (von oben nach unten aufgelistet):
- Eichenfurnier
- HDF 12 mm
- Birkenfurnier

Die beiden Furniere werden jeweils so angeordnet, dass die Kunstharzschicht zur Trägerplatte weist.

Der Pressgutstapel wird in einer Kurztaktpresse (KT-Presse) bei einer Presstemperatur von 200°C und einem Pressdruck von 40 kg/cm² bei einer Presszeit von 45 Sekunden zu einer furnierten Platte gepresst.

Nach dem Öffnen der Presse ist bei der furnierten Platte in den Poren des Eichenfurniers eine deutliche Farbvertiefung durch die schwarze Tinte erkennbar, die trotz Trocknung in der Presse von dem verflüssigten Kunstharz durch das Furnier transportiert wurde. Es war jedoch kein Melaminharz auf der Oberseite des Furniers erkennbar. Die furnierte Platte zeigte eine gefärbte Echtholzoberfläche.

Nach einer Alternative des Ausführungsbeispiels 1 kann ein Teil des Kunstharzes in flüssiger Form eingesetzt werden. Eine typische Abfolge des Auftragens von Kunstharz kann z. B. vorsehen, dass zunächst das Additiv auf das Furnier aufgetragen wird. Anschließend wird ein erster Teil des Kunstharzes in Pulverform auf das Additiv aufgebracht. Ein zweiter Teil des Kunstharzes wird anschließend in flüssiger Form aufgetragen. Anschließend wird das Kunstharz getrocknet, aber nicht ausgehärtet. Das Aushärten erfolgt, wie vorstehend beschrieben, in der Presse.

### Ausführungsbeispiel 2 - das nicht Teil der beanspruchten Erfindung ist - Leitfähigkeitserhöhung

| Ausgangsmaterialien: | | |
|---|---|---|
| Furnier für die Oberseite: | Stärke: | 0,8 mm |
| | Art: | Eiche |
| Additiv: | Aquacyl AQ 0302 (3%-ig) | 30 g/m² |
| | im Sprühauftrag aufgetragen | (*1) |
| Kunstharz: | Melaminharz | |
| | Harzauftrag: | 600% |
| Trägerplatte: | hochdichte Faserplatte: | HDF |
| | Stärke: | 12 mm |
| Gegenzug: | Art: | Furnier, Birke |
| | Stärke: | 0,8 mm |
| | Harzauftrag: | 600% |
| | Kunstharz: | Melaminharz |

| | | |
|---|---|---|
| (*1) Bei dem Produkt Aquacyl AQ 0302 handelt es sich um eine wässrige Dispersion von Multi-Wall Kohlenstoff-Nanotubes. | | |

Das Herstellen des Furniers mit Auftrag von Additiv und Kunstharz erfolgt wie vorstehend zum Ausführungsbeispiel 1 beschrieben. Als Additiv wird jedoch eine wässrige, 3 %-ige Dispersion von Multi-Wall Kohlenstoff-Nanotubes aufgesprüht, beispielsweise mittels einer Düsenanordnung, die sich über die Breite der Trägerplatte erstreckt. Auf eine Fixierung des Additivs wird hier verzichtet.

Auch der Gegenzug wird wie beim Ausführungsbeispiel 1 beschrieben hergestellt. Auf den Gegenzug werden die Trägerplatte und das Eichenfurnier zu einem Pressgutstapel geschichtet. Dieser Pressgutstapel wird in einer KT-Presse bei einer Temperatur von 180°C, einem Druck von p = 30 N/mm² während einer Presszeit von 50 Sekunden verpresst. Die so hergestellte, furnierte Platte zeigt eine Echtholzoberfläche; das Kunstharz ist auf der Oberfläche nicht erkennbar.

Zum Vergleich wurde bei sonst gleichem Aufbau und gleicher Herstellung eine Platte ohne das Additiv Aquacyl AQ0302 auf dem kunstharzgetränkten Papier hergestellt. Als Strukturgeber wurde auch bei diesem Ausführungsbeispiel ein Pressblech mit einer aufgeprägten Holzstruktur verwendet. Im Furnier war die Holzstruktur des Pressblechs als Negativ erkennbar. Nach dem Abkühlen der furnierten Platte wurde bei beiden Mustern, mit und ohne Additiv, der Oberflächenwiderstand nach der DIN EN 1081: 2018 nach einer Klimatisierung (48 h, 23 °C, 50% relative Luftfeuchte) bestimmt. Bei der Probe ohne Aquacyl AQ 0302 wurde ein Wert von 3 x 10¹¹ Ω bestimmt. Bei der Probe mit dem Additiv wurden 5 × 10⁸ Ω gemessen.

Bei der Probe mit dem Additiv wurde zusätzlich in einer weiteren Probe mit einem Bandschleifer ca. 0,2 mm der Furnieroberfläche abgeschliffen. Die erneute Messung des Oberflächenwiderstands ergab 5,5 × 10⁸ Ω. Der Oberflächenwiderstand lässt sich also durch die Verwendung von Aquacyl AQ 0302 mit Kohlenstoff-Nanotubes gegenüber der Nullprobe um ca. drei Zehnerpotenzen reduzieren. Die Leitfähigkeit der furnierten Oberseite der furnierten Platte ist damit wesentlich verbessert, und dies bei sparsamem Einsatz des Additivs. Es erweist sich als vorteilhaft, dass das Additiv durch das Auftragen auf die klebrige Oberfläche des Kunstharzes und das Fördern des Additivs durch das Kunstharz während des Verpressens gezielt in das Furnier und an die Oberfläche des Furniers gefördert wird.

### Ausfiihrungsbeispiel 3 - das nicht Teil der beanspruchten Erfindung ist - Verbesserung der Lichtechtheit

Ausgangsmaterialien:

| | | |
|---|---|---|
| Furnier für die Oberseite: | Stärke: | 0,8 mm |
| | Art: | Eiche |
| | Harzauftrag: | 600% |
| | Kunstharz: | Melaminharz |
| Additive: | Lignostab 1198 (10%ige Lösung) | 2 g/m² |
| | Tinuvin 292 (10%ige Lösung) | 2 g/m² |
| | nacheinander jeweils im Sprühauftrag aufgetragen | |
| Trägerplatte: | hochdichte Faserplatte: | HDF |
| | Stärke: | 12 mm |
| Gegenzug: | Art: | Furnier, Birke |
| Stärke: | | 0,8 mm |
| Harzauftrag: | | 600% |
| Kunstharz: | | Melaminharz |

Das Herstellen des kunstharzgetränkten Papiers sowie des Gegenzugs erfolgt in gleicher Weise wie beim Ausführungsbeispiel 1 beschrieben. Auf das Furnier werden nacheinander zwei Additive aufgetragen, eine 10 %-ige Lösung Lignostab und eine 10 %-ige Lösung Tinuvin, jeweils in einer Menge von 2 g/m². Die Auftragsmenge ist so gering, dass auf ein Fixieren verzichtet wird.

Der Pressgutstapel, der, abgesehen von den Additiven, gleich aufgebaut ist wie bei den vorstehenden Ausführungsbeispielen, wird in einer KT-Presse bei einer Temperatur von 180°C, einem Druck von p = 30 N/mm² und bei einer Presszeit von 50 Sekunden verpresst. Die resultierende furnierte Platte zeigt eine Echtholzoberfläche; das Kunstharz ist auf der Oberfläche nicht erkennbar.

Zum Vergleich wurde eine ansonsten gleiche, furnierte Platte ohne Additive (Lignostab 1198 und Tinuvin 292) auf dem Overlay hergestellt.

Als Strukturgeber wurde ein Pressblech mit einer Holzstruktur verwendet. Im Furnier der furnierten Platte war die Holzstruktur des Pressblechs erkennbar.

Anschließend wurde eine Prüfung der Lichtechtheit nach der DIN EN ISO 4892-2, 2013-06 (600 h) durchgeführt. Die Vergleichsplatte (Nullprobe) ohne die beiden Additive wurde mitgeprüft. Bei der erfindungsgemäßen, furnierten Platte mit den Additiven ergab sich ein ΔE von < 1,5, bei der Probe ohne Wirkstoff ergab sich ein ΔE von 4. Die erfindungsgemäße, furnierte Platte ist also deutlich stabiler als eine Vergleichsplatte ohne Additive. Auch hier zeigt sich, dass die Additive während des Verpressens auf der Oberfläche des verflüssigten Kunstharzes aufliegen und in das bzw. durch das Furnier gefördert werden.

### Ausführungsbeispiel 4 - Furnier beidseitig der Trägerplatte

| | | |
|---|---|---|
| Furnier für die Unter- und Oberseite: | Stärke: | 0,8 |
| mm | | |
| | Art: | Eiche |
| | Harzauftrag: | 600% |
| | Kunstharz: | Melaminharz |
| Trägerplatte: | hochdichte Faserplatte: | HDF |
| | Stärke: | 6 mm |

Es wird jeweils ein Furnier aus Eiche für die Oberseite der Trägerplatte und ein Furnier aus Eiche für die Unterseite der Trägerplatte mit Kunstharz versehen, so wie für das Ausführungsbeispiel 1 beschrieben. Auf das Kunstharz wird ein Additiv aufgegeben. Dabei kann ein Farbstoff, Pigment, Effektpigment, z. B. Metall-Pigmente oder reflektierende Pigmente, Flammschutzmittel wie z. B. Borverbindungen oder Wasserglas, Tinte, ein UV-Stabilisator, ein Infrarotabsorber, Mittel zur Erhöhung der Leitfähigkeit, antibakterielle Mittel, Hydrophobierungsmittel, Bleichmittel oder Beize als Additiv eingesetzt werden.

Das Additiv kann als Feststoff, vorzugsweise als partikelförmiger Feststoff, z. B. als Staub oder Pulver, aber auch als Granulat vorliegen. Alternativ kann ein flüssiges oder pastöses Additiv eingesetzt werden. Allerdings kann das Additiv auch im Bindemittel löslich sein; dann wird das Additiv ggf. nicht vollständig mit an die Oberfläche transportiert. Dies ist eine Frage der Dosierung des Additivs. Die einzusetzende Menge hängt vom gewünschten technischen oder ästhetischen Effekt ab und lässt sich in wenigen Versuchen ermitteln.

Die Trägerplatte ist hier eine im Vergleich zu den vorstehenden Ausführungsbeispielen dünne HDF-Platte mit einer Dicke von 6 mm. Dünne Trägerplatten sind insbesondere geeignet für die Ausstattung von Fahrzeugen, z. B. für den Innenausbau von Führerhäusern, Campingwagen, Wohnmobilen, Flugzeugen oder Schiffen, insbesondere Kreuzfahrtschiffen.

Als Alternative können grundsätzlich auch andere dünne Platten ausreichender Festigkeit eingesetzt werden, z. B. wasserfeste Platten mit minimalem Quell- und Schwindmaß, die auch zum Einsatz in Feuchträumen wie Schwimmbädern oder Saunen, aber auch Bädern und Küchen geeignet sind, insbesondere wasserfeste MDF-Platten oder Faserplatten mit hohem Bindemittelanteil.

Die vier aufgeführten Ausführungsbeispiele zeigen lediglich einen kleinen Ausschnitt der Möglichkeiten, die dieses Verfahren bietet. Zur Verbesserung der Eigenschaften der eingesetzten Furniere muss keine intensive Oberflächenbehandlung oder gar eine "Tauchimprägnierung" erfolgen. Das in das Furnier eindringende Melaminharz fungiert als Unterlage bzw. Transportmedium für die Wirkstoffe. Gleichzeitig wird auch eine Verteilung des Wirkstoffs im Furnierquerschnitt erreicht.

Weiterhin können die Platten mit den Furnieroberflächen natürlich auch zur Herstellung von Wand- oder Deckenverkleidungen eingesetzt werden. Auch der Einsatz für die Herstellung von Möbeln, Innenausbau-Elementen wie z.B. Trennwänden, Umkleidekabinen usw. sowie von Fahrzeugausstattungen oder Außenmöblierung ist möglich. Zudem können mit dieser Technologie auch spezielle Anwendungen abgedeckt werden bei denen Produkteigenschaften gefordert sind, die bisher mit Holzoberflächen nicht herstellbar waren. Diese können z. B. die Feuchtebeständigkeit, die Reinigbarkeit/Desinfizierbarkeit, die Kratzfestigkeit usw. sein. Durch das Verfahren erhält man eine Furnier-/Holzoberfläche, die die Eigenschaften einer Melaminharzoberfläche besitzt. Diese Oberfläche ist für ihre gute Beständigkeit gegenüber mechanischen, chemischen und thermischen Beanspruchungen bekannt. Durch die Steuerung des Flusses des Melaminharzes gelingt es also, die Eigenschaften einer Melaminharzoberfläche zu erzeugen, ohne dass diese tatsächlich sichtbar ist. Wenn nämlich das Melaminharz bis an die Oberfläche aufsteigt, verändert sich das Erscheinungsbild des Furniers von holzartig, also natürlich, zu kunststoffartig. Dieser Effekt ist unerwünscht und wird hier erfindungsgemäß vermieden. Einige Beispiele für mögliche Anwendungen sind Trennwände in Sanitär-/Umkleidebereichen, Fahrzeugbereich, Zahltheken, Außenmöblierung usw. Diese Liste ist selbstverständlich nicht vollständig, sondern zeigt nur einige mögliche Anwendungen.

## Patentansprüche

1. Verfahren zum Herstellen einer furnierten Platte, aufweisend ein Furnier (4) und eine Trägerplatte (1), mit den Schritten:
- Bereitstellen des Furniers (4) mit einer Oberseite (6) und mit einer Unterseite (5),
- Aufbringen eines Additivs (7) auf die Unterseite (5) des Furniers (4), und anschließend das
- Aufbringen eines partikelförmigen Bindemittels (8) auf die Unterseite (5) des Furniers (4),
- Erwärmen des Bindemittels (8) auf dem Furnier, so dass die Partikel des Bindemittels mindestens an der Oberfläche erweichen und aneinanderhaften, so dass das Bindemittel (8) und das Additiv (7) sicher mit dem Furnier (4) verbunden sind und Weiterverarbeiten des Furniers durch
- Herstellen eines Pressgutstapels, aufweisend die Trägerplatte (1) und dem auf seiner Unterseite mit dem Additiv (7) und dem Bindemittel (8) versehenen Furnier (4), wobei das Furnier (4) mit seiner Unterseite (5) an der Trägerplatte (1) anliegt,
- Verpressen des Pressgutstapels zur furnierten Platte.

2. Verfahren nach Anspruch 1, **dadurch gekennzeichnet, dass** das Additiv (7) als partikelförmiger Feststoff oder in flüssiger Form aufgetragen wird.

3. Verfahren nach einem der vorstehenden Ansprüche, **dadurch gekennzeichnet, dass** das Additiv (7) nicht in dem Bindemittel (8) lösbar oder nicht homogen in dem Bindemittel (8) lösbar ist.

4. Verfahren nach einem der vorstehenden Ansprüche, **dadurch gekennzeichnet, dass** das Additiv (7) nach dem Auftragen auf dem Furnier (4) fixiert wird.

5. Verfahren nach einem der vorstehenden Ansprüche, **dadurch gekennzeichnet, dass** das Bindemittel (8) als Feststoff aufgetragen wird.

6. Verfahren nach einem der vorstehenden Ansprüche, **dadurch gekennzeichnet, dass** eine erste Teilmenge des Bindemittels (8) als Feststoff aufgetragen wird, und dass eine zweite Teilmenge des Bindemittels in flüssiger Form aufgetragen wird.

7. Verfahren nach einem der vorstehenden Ansprüche, **dadurch gekennzeichnet, dass** das Bindemittel (8) nach dem Auftragen auf dem Furnier (4) bzw. Additiv (7) fixiert wird.

8. Verfahren nach einem der vorstehenden Ansprüche, **dadurch gekennzeichnet, dass** beim Auftragen des Additivs (7) und/oder des Bindemittels (8) die Unterseite (5) des Furniers (4) nach oben weist, so dass Additiv (7) und Bindemittel (8) von der Unterseite (5) des Furniers (4) getragen werden.

## Claims

1. A method for producing a veneered board, comprising a veneer (4) and a carrier board (1), comprising the steps of:
- providing the veneer (4) having an upper face (6) and a lower face (5),
- applying an additive (7) to the lower face (5) of the veneer (4), and then
- applying a particulate binder (8) to the lower face (5) of the veneer (4),
- heating the binder (8) on the veneer, such that the particles of the binder soften and adhere to one another at least on the surface, such that the binder (8) and the additive (7) are securely bonded to the veneer (4) and further processing the veneer by
- producing a stack of material to be pressed, comprising the carrier board (1) and the veneer (4) provided with the additive (7) and binder (8) on its lower face, wherein the veneer (4) lies against the carrier board (1) with its lower face (5),
- pressing the stack of material to be pressed to form the veneered board.

2. The method according to claim 1, **characterized in that** the additive (7) is applied as a particulate solid or in liquid form.

3. The method according to one of the preceding claims, **characterized in that** the additive (7) is insoluble in the binder (8) or is not homogeneously soluble in the binder (8).

4. The method according to one of the preceding claims, **characterized in that** the additive (7) is fixed after being applied to the veneer (4).

5. The method according to one of the preceding claims, **characterized in that** the binder (8) is applied as a solid.

6. The method according to one of the preceding claims, **characterized in that** a first partial quantity of the binder (8) is applied as a solid, and **in that** a second partial quantity of the binder is applied in liquid form.

7. The method according to one of the preceding claims, **characterized in that** the binder (8) is fixed after being applied to the veneer (4) or additive (7).

8. The method according to one of the preceding claims, **characterized in that** the lower face (5) of the veneer (4) points upward when the additive (7) and/or binder (8) is applied, such that the additive (7) and binder (8) are supported by the lower face (5) of the veneer (4).

## Revendications

1. Procédé de fabrication d'un panneau plaqué, comprenant un placage (4) et une plaque de support (1), comprenant les étapes suivantes :
- mise à disposition du placage (4) avec une face supérieure (6) et une face inférieure (5),
- application d'un additif (7) sur la face inférieure (5) du placage (4), et puis
- application d'un liant particulaire (8) sur la face inférieure (5) du placage (4),
- chauffage du liant (8) sur le placage, de manière à ce que les particules du liant se ramollissent et adhèrent les unes aux autres au moins à la surface, de manière à ce que le liant (8) et l'additif (7) soient reliés de manière sûre au placage (4), et traitement consécutif du placage par
- production d'une pile de matière à comprimer, comprenant la plaque de support (1) et le placage (4) pourvu de l'additif (7) et du liant (8) sur sa face inférieure, dans lequel le placage (4) s'applique sur la plaque de support (1) avec sa face inférieure (5),
- compression de la pile de matière à comprimer en la plaque contreplaquée.

2. Procédé selon la revendication 1, **caractérisé en ce que** l'additif (7) est appliqué en tant que matière solide particulaire ou sous forme liquide.

3. Procédé selon l'une des revendications précédentes, **caractérisé en ce que** l'additif (7) n'est pas soluble dans le liant (8) ou pas soluble de façon homogène dans le liant (8).

4. Procédé selon l'une des revendications précédentes, **caractérisé en ce que** l'additif (7) est fixé après l'application sur le placage (4).

5. Procédé selon l'une des revendications précédentes, **caractérisé en ce que** le liant (8) est appliqué en tant que matière solide.

6. Procédé selon l'une des revendications précédentes, **caractérisé en ce qu'**une première quantité partielle du liant (8) est appliquée en tant que matière solide, et **en ce qu'**une deuxième quantité partielle du liant est appliquée sous forme liquide.

7. Procédé selon l'une des revendications précédentes, **caractérisé en ce que** le liant (8) est fixé après l'application sur le placage (4) ou l'additif (7).

8. Procédé selon l'une des revendications précédentes, **caractérisé en ce que** lors de l'application de l'additif (7) et/ou du liant (8), la face inférieure (5) du placage (4) est orientée vers le haut, de telle façon que l'additif (7) et le liant (8) sont supportés par la face inférieure (5) du placage (4).
